# EUROPÄISCHE PATENTSCHRIFT

(11) **EP 1 504 928 B1**
(45) Veröffentlichungstag und Bekanntmachung des Hinweises auf die Patenterteilung: **22.02.2006**
(21) Anmeldenummer: 04015633.3
(22) Anmeldetag: 02.07.2004
(51) Int. Cl.: B60D 1/54

(54) **Anhängerkupplung für Kraftfahrzeuge**
Trailer hitch
Attache remorque

(30) Priorität: 08.08.2003 DE 10336445
(43) Veröffentlichungstag der Anmeldung: 09.02.2005
(73) Patentinhaber: Westfalia Automotive GmbH & Co. KG, 33378 Rheda-Wiedenbrück (DE)
(72) Erfinder: Hermbusch, Gerhard, 33449 Langenberg (DE); Weniger, Burkhard, 59514 Welver-Berwicke (DE)
(74) Vertreter: Valentin, Ekkehard

(56) Entgegenhaltungen:
- DE-B- 10 252 722
- US-A1- 2003 075 900
- DATABASE EPODOC EUROPEAN PATENT OFFICE, THE HAGUE, NL; DE9408478.5 8. September 1994 (1994-09-08), XP002304480

## Beschreibung

Die Erfindung betrifft eine Anhängerkupplung für Kraftfahrzeuge, umfassend eine fahrzeugfest angeordnete, von einem Antrieb unter Zwischenschaltung eines Umlaufrädergetriebes aus einer verriegelten Ruhestellung in eine verriegelte Betriebsstellung und umgekehrt schwenkbar gelagerte Kugelstange, die an ihrem freien, vom Kugelstangenlagerkopf entfernten Ende eine Kupplungskugel trägt, wobei der Kugelstange zum Festlegen bzw. Freigeben der Verriegelung ein im Bereich des Kugelstangenlagerkopfes mit radial zur Schwenkachse der Kugelstange ein- und ausrückbaren Rastmitteln zusammenwirkender, axial verstellbarer, gegen ein anstehendes Kraftelement zurückstellbarer Sperrbolzen zugeordnet ist.

Bei einer durch die DE 198 59 961 A1 bekanntgewordenen Anhängerkupplung ist die fahrzeugfest angeordnete, schwenkbar sowie axial verschieblich gelagerte Kugelstange sowohl in ihrer Ruhelage als auch in ihrer Betriebslage über in Eingriff bringbare Formschlusskonturen einerseits des Kugelstangenlagerkopfes und andererseits eines diesem gegenüberliegenden Anbauflansches drehfest festlegbar. Die Kugelstange wird sowohl in der Ruhelage, in welcher sich die Kugelstange in etwa quer zur Fahrzeuglängsrichtung unter dem Stoßfänger befindet, als auch in der Betriebslage, in welcher sich die Kugelstange im wesentlichen in Fahrzeuglängsrichtung befindet, mittels der Formschlussverbindungen drehfest festgelegt. Die Formschlussverbindungen in Form einer Verzahnung sowie einer Gegenverzahnung greifen in den Drehendstellungen des Kugelstangenlagerkopfes ineinander.

Zum Festlegen und Freigeben dieser bekannten Kugelstange dient ein verstellbares, die Lagerhülse bzw. den Kugelstangenlagerkopf abstützendes Widerlager, das wie der Kugelstangenlagerkopf auf einem Lagerbolzen angeordnet ist, der über einen Befestigungsansatz bzw. Anbauflansch an einem mit dem Fahrzeug verbundenen Querrohr befestigt ist. In der einen Axialstellung des die Lagerhülse abstützenden Widerlagers stehen die Formschlusskonturen von Lagerbolzen und Lagerhülse so miteinander in Eingriff, dass die Lagerhülse und damit die Kugelstange gegenüber dem Fahrzeug nicht verdreht werden kann. In der zweiten Axialstellung, in der das Widerlager dann von dem Anbauflansch bzw. Befestigungsansatz entfernt ist, kann die Lagerhülse so weit von dem Anbauflansch des Lagerbolzens abgerückt werden, dass die Formschlusskonturen außer Eingriff kommen und danach die Lagerhülse samt daran angeordneter Kugelstange zwischen der Ruhe- und der Betriebslage verschwenkt werden kann. Die jeweilige Verriegelungsposition wird danach durch eine erneute Axialverschiebung des Widerlagers erreicht.

Weiterhin sind Anhängerkupplungen bekannt, die zum Festlegen und Freigeben der Kugelstange eine Verriegelung aufweisen, die einen gegen ein anstehendes Kraftelement, eine Druckfeder, über ein von außen betätigbares Druck- oder Zugmittel zurückstellbaren Sperrbolzen besitzt, dem radial ein- und ausrückbare Rastmittel, insbesondere Kugeln, zugeordnet sind, wie aus der DE-U 94 08 478.5 bekannt. Das Vorspannen einer Druckfeder erfolgt hierbei mittels eines Handrades, über das eine Zahnstange einen Bowdenzug als Verbindung zum Sperrbolzen betätigt.

Aus der EP 0 850 147 B1 ist eine Anhängerkupplung mit einem motorischen Antrieb unter Zwischenschaltung eines Umlaufrädergetriebes zum Verschwenken der Kugelstange zwischen ihrer Ruhe- und ihrer Betriebsstellung bekannt. Die Kugelstange selbst ist hierbei als Teil einer Spindel eines Spindel-Mutter-Antriebes ausgebildet und axial verstellbar. Sie besitzt eine eingeschraubte Verstellspindel, die über ein Stimrad- sowie Planetengetriebe von einem elektrischen Motor gedreht wird. Die Kugelstange ist in einer Führungshülse angeordnet, die mit einer Zwangsführung ausgebildet ist und bewirkt, dass nach einem geführten Axial-Verstellweg die Kugelstange dann mit in ihrer Betriebsstellung nach oben zeigender Kugel gedreht wird.

Der Erfindung liegt die Aufgabe zugrunde, bei einer Anhängerkupplung der eingangs genannten Art mit einfachen Mitteln ein betriebssicheres motorisches Verschwenken der Kugelstange zu ermöglichen.

Diese Aufgabe wird erfindungsgemäß dadurch gelöst, dass der Sperrbolzen über das Umlaufrädergetriebe mit dem Antrieb verbunden ist und an seinem dem Antrieb zugewandten Ende ein die rotatorische Bewegung des Umlaufrädergetriebes in eine in der Schwenkachse der Kugelstange erfolgende translatorische Ausrückbewegung des Sperrbolzens umwandelndes Hubsteuerungsmittel ausgebildet ist. Damit lässt sich ohne ein in der Kugelstangenlagerung erforderliches zusätzliches Bauteil, vielmehr unter Einbeziehung des ohnehin vorhandenen Sperrbolzens, das Freigeben sowie anschließende motorische Verschwenken in die gewünschte Stellung und dort Verriegeln der Kugelstange durch entweder in Eingriff oder außer Eingriff bringen der einerseits am Kugelstangenlagerkopf und andererseits diesem gegenüberliegend am Anbauflansch vorgesehenen Formschlußkonturen erreichen.

Denn wenn der elektrische Antrieb mit Übersetzung durch das Umlaufrädergetriebe betätigt wird, wird durch Bewegungsübertragung zunächst allein auf den Sperrbolzen durch das Hubsteuerungsmittel dessen gezieltes Ausrücken gegen die Kraft des sich dabei gleichzeitig vorspannenden Kraftelementes (Druckfeder) und aufgrund der damit einhergehenden Axialbewegung die Freigabe der Formschlußkonturen herbeigeführt, die nämlich voneinander entfernt werden. Dieser Abstand wird von einem Distanzhalterelement während der gesamten, sich nach der Freigabe bzw. Auslösung des Sperrbolzens anschließenden motorischen Verschwenkung der Kugelstange bis in deren Endposition aufrechterhalten. Erst wenn diese erreicht ist, wird das Distanzhalterelement wirkungslos, indem es z.B. in eine in der Endposition im gegenüberliegenden Bauteil (Stirnfläche des Kugelstangenlagerkopfes) angeordnete, korrespondierende Öffnung bzw. Ausnehmung eintaucht bzw. -greift. Das ist der Zeitpunkt, zu dem das vorgespannte Kraftelement den Sperrbolzen in seine Verriegelungslage vorrückt und die Formschlusskonturen wieder in Eingriff bringt. Das Hubsteuerungsmittel lässt sich außerhalb des Kugelstangenlagerkopfes vorsehen und ist somit von außen frei zugänglich.

Die Erfindung sieht vor, dass das Hubsteuerungsmittel aus einem stimseitig V-förmig eingeschnittenen Kurvenstück des Sperrbolzens und einem diesem gegenüberliegenden, an einem mit dem Motorritzel kämmenden großen Zahnrad, das getrieblich dem Umlaufrädergetriebe zugeordnet ist, ausgebildeten, stimseitig versetzt V-förmig eingeschnittenen Gegenkurvenstück besteht. In der zur Verriegelung eingerückten Position des Sperrbolzens greifen die V-Einschnitte klauenartig ineinander, während sich hingegen zur axialen Ausrückbewegung des Sperrbolzens dessen Kurvenstück aufgrund der schiefen Ebene der Einschnitte und deren gegensinnig übereinander gleitenden Einschnittflächen aus dem Gegenkurvenstück des großen Zahnrades abhebt, bis die Einschnitte nach einer Drehung von vorzugsweise 90° in Deckungslage fluchtend einander gegenüberliegen, womit das Kurvensteuerungsmittel geöffnet und der Sperrbolzen einschließlich Kugelstange entriegelt ist. Die Tiefe des Einschnitts bzw. der Einschnitte definiert den Weg des axialen Ausrückhubes des Sperrbolzens.

Nach einer bevorzugten Ausführung der Erfindung ist das Sperrbolzen-Kurvenstück als mit dem Sperrbolzen verschraubter Topf und das Gegenkurvenstück als Hohlzapfen des großen Zahnrades ausgebildet, wobei die V-förmigen Steuerkurven-Einschnitte in der Topf- bzw. Zapfenwandung vorgesehen sind. Die Topf- bzw. Hohlbauweise begrenzt bei der Herstellung der Steuerkurven-Einschnitte die Bearbeitung auf die Wände.

Die Erfindung sieht vorzugsweise vor, dass auch das Hubsteuerungsmittel in der Ausgangsstellung bei kraftbeaufschlagt in seine Sperrposition eingerücktem Sperrbolzen verriegelt ist. Somit lässt sich für das erfindungsgemäße, in sich geschlossene motorische Verschwenksystem eine weitere Sicherung erreichen. Diese verhindert, dass sich der Sperrbolzen in den veriegelten Endpositionen, in denen der Antrieb völlig entlastet ist, aufgrund von beispielsweise Betriebslasten bzw. -kräften unerwünscht selbsttätig lösen und zurückschieben kann.

Es wird vorgeschlagen, dass die Verriegelung aus einem radialen Vorsprung, z.B. ein abstehender Bolzen, des das Sperrbolzen-Kurvenstück aufweisenden Topfes und einem am großen Zahnrad vorgesehenen, dort einfachstenfalls angeschraubten Sperrklinkenmittel, wie ein Kipphebel, besteht, das bei Rotation des Zahnrades den Vorsprung freigibt bzw. sich beim linearen Einrücken der Kurvenstücke, wobei deren Einschnitte dann wieder ineinandergreifen, selbsttätig mit dem Vorsprung verrastet, z. B. indem der Vorsprung die Klinke, den Kipphebel oder dergleichen gegen Federkraft wegkippt, der dann von der Klinke, dem Kipphebel in der Endlage hintergriffen wird.

Das Sperrbolzen-Kurvenstück ist vorzugsweise auf einer Verlängerungsstange des Sperrbolzens angeordnet. Die mit einem Gewindeabschnitt in den Sperrbolzen eingeschraubte Verlängerungsstange durchdringt den Anbauflansch und das große Zahnrad durch dessen Hohlzapfen und ermöglicht es, den Topf und damit das Sperrbolzen-Kurvenstück von außen frei zugänglich mit einer Schraubverbindung zu montieren.

Nach einem bevorzugten Vorschlag der Erfindung ist der Sperrbolzen zentral in einer Hohlwelle angeordnet, auf der der Kugelstangenlagerkopf gelagert ist. Durch die Abkehr von einer auf einem Lagerbolzen bzw. einer durchgängigen Lagerachse gelagerten Kugelstange, die somit vielmehr auf einer Hohlwelle mit zentral integrierter Verriegelung angeordnet ist, lässt sich ein in sich geschlossenes, weitestgehend wartungsfreies System erreichen, bei dem gleichwohl das Hubsteuerungsmittel außerhalb der Kugelstangenlagerung angeordnet ist.

Wenn die Hohlwelle vorteilhaft mit einem Ringkragen in eine Ausdrehung des Kugelstangenlagerkopfes eingreift, lässt sich erreichen, dass nach einer vorteilhaften Ausgestaltung der Erfindung der Ringkragen über seinen Umfang verteilt mit mehreren Durchbrechungen versehen werden kann, durch die mit einem Hohlrad des Kugelstangenlagerkopfes kämmende Planetenräder hindurchtauchen. Die Durchbrechungen dienen somit als Freimachungen, in denen die Planetenräder laufen und die Antriebsbewegung auf das Hohlrad des Umlaufrädergetriebes übertragen.

Das Hohlrad lässt sich nach einem Vorschlag der Erfindung einstückig mit dem Kugelstangenlagerkopf ausbilden, der in seiner den Ringkragen der Hohlwelle aufnehmenden Ausdrehung zu diesem Zweck lediglich mit einer Innenverzahnung versehen zu werden brauchte. Das Hohlrad, das axial verschieblich auf den Planetenrädern angeordnet ist und sich abhängig von den Hubbewegungen des Sperrbolzens hin und her bewegt, lässt sich alternativ als separates Bauteil her stellen und mit dem Kugelstangenlagerkopf verschrauben.

Wenn nach einer Ausgestaltung der Erfindung der Topf des Sperrbolzen-Kurvenstückes mit Passfedem in Axialnuten am Außenumfang der Hohlwelle eingreift, lässt sich in einfacher Weise eine exakte Führung bei den Hubbewegungen des Sperrbolzens erreichen.

In Weiterbildung der Erfindung greift ein mit dem Hohlrad des Umlaufrädergetriebes kämmendes Sonnenrad über Mitnahmemittel in in dem großen Zahnrad in Umfangsrichtung ausgebildete Nuten ein. Beim Drehen des großen Zahnrades wird zunächst das axiale Ausrücken des Sperrbolzens aufgrund der sich dann gegensinnig übereinander schiebenden Kurvenflächen der sich aus ihrer Verklammerung öffnenden Steuerkurven-Einschnitte bewirkt. Sobald die Mitnahmemittel des Sonnenrades, z. B. Zapfen, an die Endbegrenzungen der in der Rückseite des großen Zahnrades vorgesehenen Nuten anschlagen, setzt die Bewegungsübertragung des Antriebs auf das Umlaufrädergetriebe und damit einhergehend das Verschwenken der Kugelstange ein.

Eine vorteilhafte Ausführung der Erfindung sieht vor, dass dem Sperrbolzen in zwei im Abstand parallel voneinander vorgesehenen Radialebenen gegenläufig wirkende Rastmittel zugeordnet sind. Hierbei lässt sich mit ausschließlich der hinteren, dem Anbauflansch zugewandten Ebene in den Drehendlagen der Kugelstange deren Verriegelung erreichen, wobei die dortigen Rastmittel den Kugelstangenlagerkopf in diese Ebene hineinziehen. Hingegen sind die Rastmittel der vorderen Radialebene in diesem Betriebszustand für die Verriegelung der Formschlusskonturen unwirksam. Beim Auslösen zum Verschwenken des Kugelstangenlagerkopfes unterstützen dann aber die Rastmittel der vorderen Radialebene das Abdrücken des Kugelstangenlagerkopfes aus seiner Formschlussverbindung mit dem Anbauflansch, weil die Rastmittel der vorderen Radialebene den Kugelstangenlagerkopf zusätzlich definiert in Löserichtung wegdrücken. Diese unterstützende Beaufschlagung des Kugelstangenlagerkopfes in Löserichtung gewährleistet, dass ein Ausrücken der Kugelstange auch bei tiefen Temperaturen oder bei Verschmutzung der Anhängerkupplung, zumal wenn diese lange nicht benutzt und betätigt worden ist, mit dann möglicherweise in ihren Sitzen verbakkenen Rastmitteln ohne Beschädigungen hervorzurufen möglich ist.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: eine Gesamtansicht einer Anhängerkupplung mit motorisch in ihre Betriebsstellung verschwenkter Kugelstange, von der Antriebsseite her gesehen;
- Fig. 2: die Anhängerkupplung nach Fig. 1 in explosiver Darstellung ihrer Bauteile;
- Fig. 3: eine Gesamtansicht einer Anhängerkupplung mit motorisch in ihre Ruhelage verschwenkter und dort verriegelter Kugelstange;
- Fig.: 4 in einer anderen Gesamtansicht eine Anhängerkupplung im entriegelten Zustand aus der Betriebsstellung heraus, vor dem motorischen Verschwenken der Kugelstange;
- Fig. 5: in einem Teillängsschnitt eine Anhängerkupplung mit motorisch in die Betriebslage verschwenkter Kugelstange, in der Verriegelungsposition entsprechend Fig. 3 dargestellt;
- Fig. 6: die Anhängerkupplung nach Fig. 5 in entsprechend Fig. 4 entriegelter Position, vor dem motorischen Verschwenken der Kugelstange aus der Betriebs- in die Ruhelage dargestellt; und
- Fig. 7: als vergrößerte Teil-Schnittansicht eine Anhängerkupplung im Zustand der Verriegelung ihrer Kugelstange entweder in der Betriebs- oder der Ruhestellung.

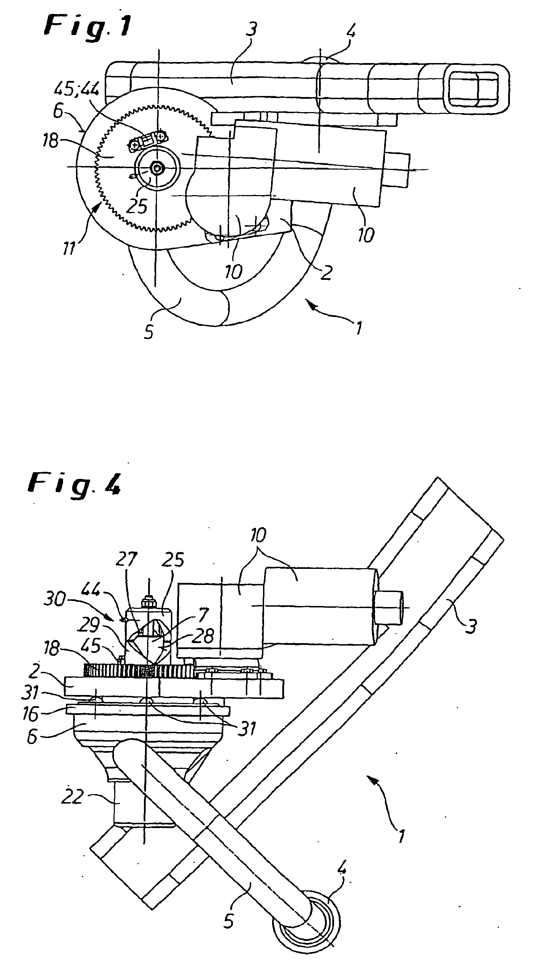

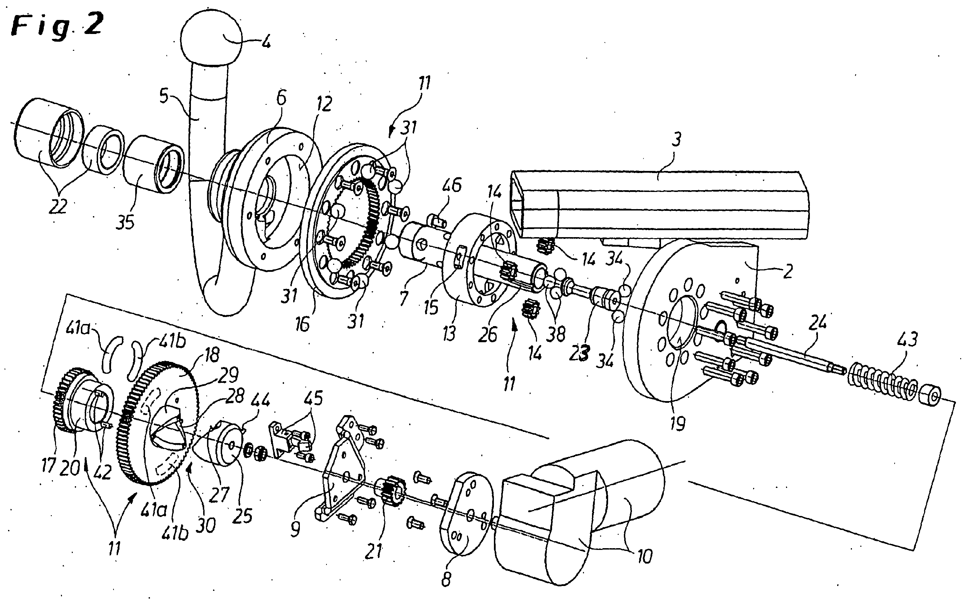

Eine in den Fig. 1 bis 6 gezeigte Anhängerkupplung 1 ist über einen Anbauflansch 2 und einem ein- oder mehrteiligen Querträger 3 an einem Fahrzeug (nicht dargestellt) befestigt. Die Anhängerkupplung 1 umfaßt eine gekröpfte, an ihrem freien Ende eine Kupplungskugel 4 tragende Kugelstange 5, die mit ihrem Kugelstangenlagerkopf 6 auf einer Hohlwelle 7gelagert ist. Zum Verschwenken der Kugelstange 5 zwischen ihrer Ruhe- und ihrer Betriebsstellung ist der Anhängerkupplung 1 ein über Anbauteile 8, 9 (vgl. Fig. 2) befestigter, elektro-motorischer Antrieb 10 zugeordnet, der über ein Umlaufrädergetriebe 11 mit dem Kugelstangenlagerkopf 6 verbunden ist.

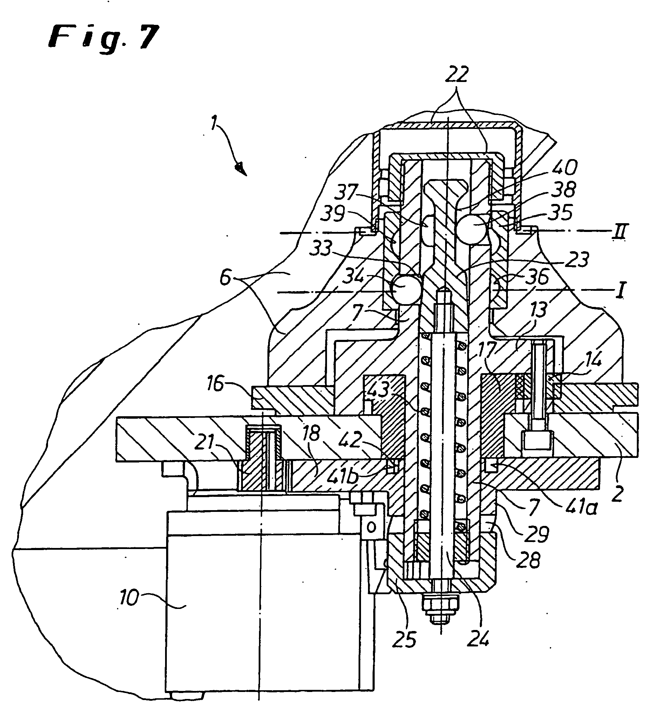

Der Aufbau der motorisch verschwenkbaren Anhängerkupplung lässt sich näher der Explosiv-Darstellung nach Fig. 2 entnehmen. Der Kugelstangenlagerkopf 6 ist mit einer Ausdrehung 12 versehen, in die die Hohlwelle 7 mit einem Ringkragen 13 eingreift. Der Ringkragen 13 besitzt als Freimachungen für Planetenräder 14 über seinen Umfang verteilt mehrere, im Ausführungsbeispiel drei, Durchbrechungen 15, durch die die Planetenräder 14 hindurchtauchen und mit einem mit dem Kugelstangenlagerkopf 6 verschraubten Hohlrad 16 kämmen. Das Umlaufrädergetriebe 11 weist weiterhin ein Sonnenrad 17 und - von der Antriebsseite her gesehen vor dem Anbauflansch 2 liegend - ein großes Zahnrad 18 auf. Das wie das große Zahnrad bzw. Antriebsrad 18 auf der Hohlwelle 7, die mit ihrem vorderen Ende durch eine Durchgangsbohrung 19 des Anbauflansches 2, in die vorne bündig abschließend auch ein Bund 20 des Sonnenrades 17 eintaucht, angeordnete Sonnenrad 17 kämmt mit seinem Zahnkranz mit den Planetenrädern 14 und diese mit dem Zahnkranz des Hohlrades 16 (vgl. Fig. 7). Der in seiner Drehrichtung umschaltbare Antrieb 10 gibt seine Antriebsleistung über ein mit dem großen Zahnrad 18 kämmendes Motorritzel 21 an das Umlaufrädergetriebe 11 weiter. Das von der Antriebsseite entfernte, hintere Ende der Hohlwelle 7 und der darauf gelagerte Kugelstangenlagerkopf 6 sind durch Kappen bzw. Hülsen 22 nach außen hin verschlossen.

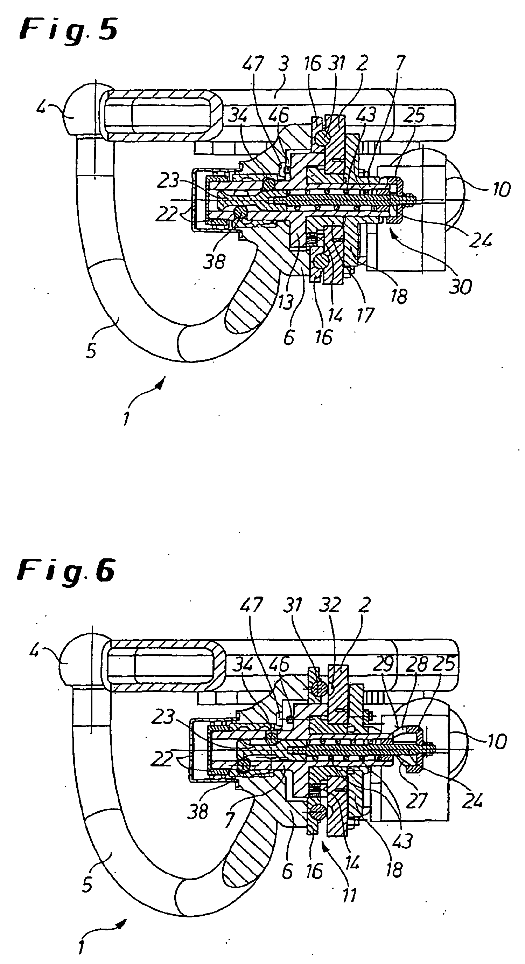

Zentral im Inneren der Hohlwelle 7 ist ein durch ein Kraftelement in Form einer Druckfeder 43 in Einrückrichtung beaufschlagter Sperrbolzen 23 angeordnet, in den eine durch den Anbauflansch 2 hinaus verlängerte Gewindestange 24 eingeschraubt ist, die an ihrem freien Ende mit einem durch Schrauben befestigten Topf 25 versehen ist. Dieser wird mit innen liegenden Federleisten in Axialnuten 26 des vorderen Endes der Hohlwelle 7, das aus dem Anbauflansch 2 vorragt, geführt und ist in seiner Wandung durch einen V-förmigen Einschnitt als Kurvenstück mit Steuerkurven 27 ausgebildet, die mit in einem Gegenkurvenstück V-förmig eingeschnittenen Steuerkurven 28 eines Hohlzapfens 29 des großen Zahnrades bzw. Antriebsrades 18 ein Hubsteuerungsmittel 30 bilden, das die rotatorische Bewegung des Antriebsrades 18 in eine translatorische Ausrückbewegung des Sperrbolzens 23 umwandelt. Dies dann, wenn die die Ruhe- bzw. Betriebsstellung der Anhängerkupplung 1 sichernde Formschlussverbindung, die hier aus in dem Hohlrad 16 angeordneten Kugeln 31 und diesen in der Stirnfläche des Anbauflansches 2 gegenüberliegend zugeordneten Kalotten 32 (vgl. die Fig. 5 und 6) besteht, zum Verschwenken des Kugelstangenlagerkopfes 6 mit der Kugelstange 5 frei gemacht werden soll.

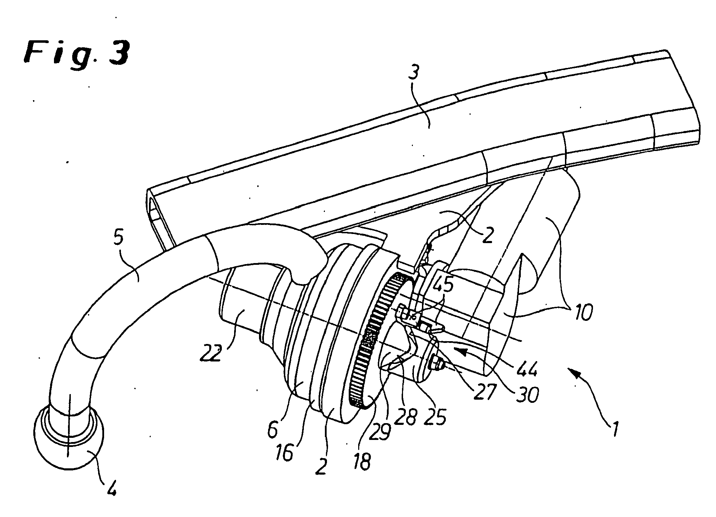

Zur Sicherung der Formschlußverbindung der Kugeln 31 in den gegenüberliegenden Kalotten 32 und damit Verriegelung der Kugelstange 5 in ihrer Ruhe- bzw. Betriebslage sind - wie sich näher aus Fig. 7 ergibt - für den Sperrbolzen 23 in einer hinteren Radialebene I in Radialbohrungen 33, diese sind wegen der versetzten Schnittebene nur teilweise zu erkennen, der Hohlwelle 7 mehrere Rastmittel in Form von Kugeln 34 vorgesehen, die von dem rückwärtigen Körper des Sperrbolzens 23 nach außen gedrückt werden und dabei in eine ihnen in einem Lagerring 35 des Kugelstangenlagerkopfes 6 zugeordnete Aufnahme 36, ausgebildet beispielsweise als Ringnut oder Rille, bewegt werden. Die Aufnahme 36 ist an ihrer zu dem Anbauflansch 2 weisenden Lauffläche mit einer Anlaufschräge ausgebildet, die in der in den Drehendlagen verriegelten Position der Kugelstange 5 eine gezielt ausgerichtete Kraft in Richtung auf den Anbauflansch 2 und damit in die Formschlussverbindung der Kugeln 31 mit den Kalotten 32 ausübt. Diese gemäß Fig. 7 verriegelte Stellung nehmen auch die in den Fig. 3 und 5 gezeigten Anhängerkupplungen 1 ein.

Dem Sperrbolzen 23 sind in einer zweiten, vorderen Radialebene II in Radialbohrungen 37 der Hohlwelle 7 umfangsverteilt weitere Rastmittel in Form von Kugeln 38 und einer Aufnahme 39, ausgebildet beispielsweise wieder als Ringnut oder Rille in dem Lagerring 35, zugeordnet. Diese vordere Aufnahme 39 ist mit einer Anlaufschräge ausgebildet, die eine gezielt gegenläufig zur Anlaufschräge der vorderen Radialebene I ausgerichtete Kraft, nämlich weg vom Anbauflansch 2 bewirkt, wobei die Kugeln 31 der Formschlußverbindung aus den Kalotten 32 des Anbauflansches 2 herausgerückt sind, wie in den Fig. 4 und 6 zu erkennen.

In den Verriegelungspositionen nach den Fig. 3, 5 und 7 sind die Kugeln 38 der vorderen Radialebene II unwirksam; sie sind aus ihrer Aufnahme 39 herausgetreten und in den Radialbohrungen 37 der Hohlwelle 7 nach innen gefallen. Um diesen Freiraum zu schaffen, ist das vordere Ende des Sperrbolzens 23 mit einem Einschnürungsquerschnitt 40 hundeknochenartig ausgebildet. Der somit einen geringeren Durchmesser aufweisende Einschnürungsquerschnitt 40 geht mit Schrägflächen in den sowohl rückwärtigen Sperrbolzenkörper als auch den Sperrbolzenkopf über.

Während der gesamten Zeit, in der die Kugelstange 5 ihre verriegelte Endposition (Ruhe- oder nach vorne verschwenkte Betriebsstellung) einnimmt, wird diese Position durch eine mechanische Verriegelung zusätzlich gesichert, die Bewegungen des Sperrbolzens 23 und damit des Hubsteuerungsmittels 30 aufgrund von eventuellen äußeren Betriebslasten verhindert. Dazu ist das Sperrbolzen-Kurvenstück 27 des Topfes 25 mit einem radialen Vorsprung in Form eines seitlich abstehenden Bolzens 44 versehen. Diesem ist ein an dem großen Zahnrad 18 angeschraubter Kipphebel bzw. eine Sperrklinke 45 oder dergleichen zugeordnet. Die Sperrklinke 45 legt sich über den Bolzen 44, wie deutlich in Fig. 3 zu erkennen ist. Zur Freigabe beim gesteuerten motorischen Ausrücken des Sperrbolzens 23 gegen die Kraft der sich dabei vorspannenden Druckfeder 43 verlagert sich die Sperrklinke 45 im Zuge der Rotation des großen Zahnrades 18 dann weg von dem Bolzen 44; sobald dieser frei ist, setzt der axiale Ausrückhub ein.

Um die Auslösung - wie in den Fig. 4 und 6 gezeigt - und damit das Entriegeln bzw. Ausrücken einerseits des Sperrbolzens 23 und andererseits der Formschlußverbindung über die Kugeln 31 sowie Kalotten 32 zwischen dem Kugelstangenlagerkopf 6 bzw. dem mit diesem verschraubten Hohlrad 16 und dem Anbauflansch 2 zu erreichen, so daß die Kugelstange 5 zum anschließenden motorischen Verschwenken in eine andere Drehlage freikommt, wird der Sperrbolzen 23 durch Betätigung des Antriebes 10 zurückgestellt bzw. -gezogen. Die Antriebsleistung wird nämlich über das Motorritzel 21 auf das große Zahnrad bzw. Antriebsrad 18 übertragen. Aufgrund des dann mit dem großen Zahnrad 18 rotierenden Hohlzapfens 29 des Hubsteuerungsmittels 30 bewegen sich die Steuerkurven 27 und 28 von Topf 25 und Hohlzapfen 29 des großen Zahnrades 18 gegensinnig, wodurch der Topf 25 mit dem daran über die Gewindestange 24 befestigten Sperrbolzen 23 axial abgedrückt bzw. gegen die Kraft der Druckfeder 43 ausgerückt wird.

Das Hohlrad 16 samt Kugelstangenlagerkopf 6 verschiebt sich damit auf den Planetenrädern 14 entsprechend in axialer Richtung, bis das Kurvenstück bzw. die Steuerkurve 27 des Topfes 25 und das Gegenkurvenstück bzw. die Steuerkurve 28 des Hohlzapfens 29 nach einer Drehbewegung des großen Zahnrades 18 von etwa 90° ihre in Fig. 4 gezeigte geöffnete Position eingenommen haben, die gleichbedeutend mit dem Ende des Ausrückhubes ist. Die Kugeln 31 haben sich aus den Kalotten 32 des Anbauflansches 2 abgehoben, womit die Formschlussverbindung frei ist, und ein in dem Ringkragen 13 der Hohlwelle 7 angeordnetes Distanzhalteelement 46 ist dabei aus einer gegenüberliegenden, in der Stimfläche des Kugelstangenlagerkopfes 6 vorgesehenen Ausnehmung, Bohrung 47 oder dergleichen freigekommen. Beim anschließenden motorischen Verschwenken der Kugelstange 5 hält das Distanzhalteelement 46 den Abstand zwischen dem Anbauflansch 2 und dem sich dazu relativ verschwenkenden Kugelstangenlagerkopf 6 aufrecht und gewährleistet, dass die Kurvenstücke 27 und 28 des Hubsteuerungsmittels 30 unter der Vorspannung der Druckfeder 43, die den Sperrbolzen 23 beaufschlagt, erst dann wieder in ihre miteinander verklammerte Lage gelangen können, wenn die Schwenk-Endposition erreicht ist. In dieser taucht das Distanzhalteelement 46 wieder in die gegenüberliegende Ausnehmung 47 ein.

Einhergehend mit dem beschriebenen gesteuerten axialen Ausrückhub des Sperrbolzens 23 kommen die Kugeln 34 der hinteren Radialebene I frei, fallen aus der Aufnahme 36 des Lagerringes 35 durch die Radialbohrungen 33 der Hohlwelle 7 nach innen und legen sich dort an die Schrägfläche im Übergang zum rückwärtigen Sperrbolzenkörper an. Gleichzeitig werden die Kugeln 38 der vorderen Radialebene II von der Schrägfläche des Sperrbolzenkopfes durch die Radialbohrungen 37 der Hohlwelle 7 in die Aufnahme 39 des Lagerringes 35 nach außen gedrückt. Dort üben sie durch den Kontakt mit der nach vome, in Abdrückrichtung wirkenden Anlaufschräge der Aufnahme 39 eine Kraft aus, die den Kugelstangenlagerkopf 6 zusätzlich axial beaufschlagt.

Der Antrieb 10 kann nach dem vorbeschriebenen Auslösen und -rücken des Sperrbolzens 23 dann mittels des Umlaufrädergetriebes 11 die Kugelstange 5 ungehindert in die gewünschte Drehendlage verschwenken. Hierzu sind in der Rückseite des großen Zahnrades 18 in Umfangsrichtung Nuten 41a bzw. 41b eingearbeitet, in die das Sonnenrad 17 mit Zapfen 42 eingreift (vgl. Fig. 2 in Verbindung mit Fig. 7). Wenn die Zapfen 42 in Drehrichtung in den Nuten 41a, 41b ihren Anschlag finden, überträgt dass Sonnenrad 17 in der Folge die Bewegung des Antriebsrades 18 über die Planetenräder 14 auf das Hohlrad 16 und damit auf die Kugelstange 5 bzw. deren Kugelstangenlagerkopf 6 weiter.

Um die Kugelstange 5 in eine andere Betriebslage motorisch zu verschwenken, wird durch Umschalten des Antriebs 10 und damit Drehrichtungsumkehr des großen Zahnrades 18 mit umgekehrten Bewegungsabläufen zunächst das von dem Hubsteuerungsmittel 30 vorgegebene Auslösen bzw. axiale Aurücken des Sperrbolzens 23 und anschließend über das Umlaufrädergetriebe 11 das motorische Verschwenken der Kugelstange 5 bewirkt, bis letztendlich die Verriegelung des Sperrbolzens 23 und der Formschlussverbindung 31, 32 durch Freigeben des beim Entriegeln durch das Hubsteuerungsmittel 30 vorgespannten Federspeichers (Druckfeder 43) entsprechend den Fig. 3, 5 und 7 wieder vorliegt.

## Patentansprüche

1. Anhängerkupplung (1) für Kraftfahrzeuge, umfassend eine fahrzeugfest angeordnete, von einem Antrieb (10) unter Zwischenschaltung eines Umlaufrädergetriebes (11) aus einer verriegelten Ruhestellung in eine verriegelte Betriebsstellung und umgekehrt schwenkbar gelagerte Kugelstange (5), die an ihrem freien, vom Kugelstangenlagerkopf (6) entfernten Ende eine Kupplungskugel (4) trägt, wobei der Kugelstange (5) zum Festlegen bzw. Freigeben der Verriegelung ein im Bereich des Kugelstangenlagerkopfes (6) mit radial zur Schwenkachse der Kugelstange ein- und ausrückbaren Rastmitteln (34) zusammenwirkender, axial verstellbarer, gegen ein anstehendes Kraftelement (43) zurückstellbarer Sperrbolzen (23) zugeordnet ist,
**dadurch gekennzeichnet,**
**daß** der Sperrbolzen (23) über das Umlaufrädergetriebe (11) mit dem Antrieb (10) verbunden ist und an seinem dem Antrieb (10) zugewandten Ende mit einem die rotatorische Bewegung des Umlaufrädergetriebes (11) in eine in der Schwenkachse der Kugelstange erfolgende translatorische Ausrückbewegung des Sperrbolzens (23) umwandelndes Hubsteuerungsmittel (30) ausgebildet ist.

2. Anhängerkupplung nach Anspruch 1,
**dadurch gekennzeichnet,**
**daß** das Hubsteuerungsmittel (30) aus einem stimseitig V-förmig eingeschnittenen Kurvenstück (27) des Sperrbolzens (23) und einem diesem ge-genüberliegenden, an einem mit einem Motorritzel (21) kämmenden großen Zahnrad (18), das getrieblich dem Umlaufrädergetriebe (11) zugeordnet ist, ausgebildeten, stimseitig versetzt V-förmig eingeschnittenen Gegenkurvenstück (28) besteht.

3. Anhängerkupplung nach Anspruch 2,
**dadurch gekennzeichnet,**
**daß** das Sperrbolzen-Kurvenstück (27) als mit dem Sperrbolzen (23) verschraubter Topf (25) und das Gegenkurvenstück (28) als Hohlzapfen (29) des großen Zahnrades (18) ausgebildet ist, wobei die V-förmigen Steuerkurven-Einschnitte in der Wandung des Topfes bzw. des Hohlzapfens (25; 29) vorgesehen sind.

4. Anhängerkupplung nach Anspruch 2 oder 3,
**dadurch gekennzeichnet,**
**daß** das Hubsteuerungsmittel (30) in der Ausgangsstellung bei kraftbeaufschlagt eingerücktem Sperrbolzen (23) verriegelt ist.

5. Anhängerkupplung nach Anspruch 4,
**dadurch gekennzeichnet,**
**daß** die Verriegelung aus einem radialen Vorsprung (44) des das Sperrbolzen-Kurvenstück (27) aufweisenden Topfes (25) und einem am großen Zahnrad (18) vorgesehenen Sperrklinkenmittel (45) besteht, das bei Rotation des Zahnrades (18) den Vorsprung (44) freigibt bzw. sich beim linearen Einrücken von Sperrbolzen-Kurvenstück (27) und Gegenkurvenstück (28) selbsttätig mit dem Vorsprung (44) verrastet.

6. Anhängerkupplung nach einem der Ansprüche 2 bis 5,
**dadurch gekennzeichnet,**
**daß** das Sperrbolzen-Kurvenstück (27) auf einer Verlängerungsstange (24) des Sperrbolzens (23) angeordnet ist.

7. Anhängerkupplung nach einem der Ansprüche 1 bis 6,
**dadurch gekennzeichnet,**
**daß** der Sperrbolzen (23) zentral in einer Hohlwelle (7) angeordnet ist, auf der der Kugelstangenlagerkopf (6) gelagert ist.

8. Anhängerkupplung nach Anspruch 7,
**dadurch gekennzeichnet.**
**dass** die Hohlwelle (7) mit einem Ringkragen (13) in eine Ausdrehung (12) des Kugelstangenlagerkopfes (6) eingreift.

9. Anhängerkupplung nach Anspruch 7 oder 8,
**dadurch gekennzeichnet,**
**daß** der Ringkragen (13) über seinen Umfang verteilt mehrere Durchbrechungen (15) aufweist, durch die mit einem Hohlrad (16) des Kugelstangenlagerkopfes (6) kämmende Planetenräder (14) hindurchtauchen.

10. Anhängerkupplung nach Anspruch 9,
**dadurch gekennzeichnet,**
**daß** das Hohlrad (16) einstückig mit dem Kugelstangenlagerkopf (6) ausgebildet ist.

11. Anhängerkupplung nach Anspruch 9 oder 10,
**dadurch gekennzeichnet,**
**daß** das Hohlrad (16) axial verschieblich auf den Planetenrädern (14) angeordnet ist.

12. Anhängerkupplung nach einem der Ansprüche 3 bis 11,
**dadurch gekennzeichnet,**
**daß** der Topf (25) des Sperrbolzen-Kurvenstückes (27) mit Paßfedem in Axialnuten (26) am Außenumfang der Hohlwelle (7) eingreift.

13. Anhängerkupplung nach einem der Ansprüche 2 bis 12,
**dadurch gekennzeichnet,**
**daß** ein mit dem Hohlrad (16) des Umlaufrädergetriebes (11) kämmendes Sonnenrad (17) über Mitnahmemittel (42) in in dem großen Zahnrad (18) in Umfangsrichtung ausgebildete Nuten (41a, 41b) eingreift.

14. Anhängerkupplung nach einem der Ansprüche 1 bis 13,
**dadurch gekennzeichnet,**
**daß** dem Sperrbolzen (23) in zwei im Abstand parallel voneinander vorgesehenen Radialebenen (I; II) gegenläufig wirkende Rastmittel (34, 35, 36; 38, 35, 39) zugeordnet sind.

## Claims

1. A trailer coupling (1) for motor vehicles, including a towing hitch (5) which is permanently secured to the vehicle and is supported so as to be pivotable from a locked rest position into a locked operating position and vice versa by a drive unit (10) with interposed planetary gear train (11), and supports a coupling ball (4) at its free end, located farthest from the towing hitch bearing head (6), wherein an axially adjustable locking pin (23) that is returnable against a biasing force element (43) and cooperates in the area of the towing hitch bearing head (6) with engageable and disengageable engaging mechanisms (34) arranged radially with respect to the pivot axis of the towing hitch, is attached to the towing hitch (5) in order to set and release the lock,
**characterised in that** the locking pin (23) is connected with the drive unit (10) via the planetary gear train (11) and at the end thereof facing the drive unit (10) is conformed with a lift control means (30) that converts the rotary movement of the planetary gear train (11) to a translatory disengaging movement of the locking pin (23) that takes place in the pivot axis of the towing hitch.

2. The trailer coupling as cited in claim 1,
**characterised in that** the lift control means (30) includes a curved element (27) of the locking pin (23) with a V-shaped notch recessed in the frontal face thereof, and a matching curved element (28) with offset V-shaped notch recessed in the frontal face thereof arranged opposite thereto on a large gearwheel (18) that meshes with a motor pinion (21) and is attached by geared means to the planetary gear train (11).

3. The trailer coupling as cited in claim 2,
**characterised in that** the locking pin curved element (27) is conformed as a pot (25) and the matching curved element 28) is conformed as a hollow journal (29) of the large gearwheel (18), wherein the V-shaped control curve notches are provided in the wall of the pot and of the hollow journal (25; 29).

4. The trailer coupling as cited in either of claims 2 or 3,
**characterised in that** in the starting position the lift control means (30) is locked with the locking pin (23) being inserted under the application of force.

5. The trailer coupling as cited in claim 4,
**characterised in that** the locking mechanism includes a radial projection (44) of the pot (25) having the locking pin curved element (27) and a ratchet mechanism (45) provided on the large gearwheel (18), which ratchet mechanism releases the projection (44) when the large gearwheel (18) rotates and automatically engages with the projection (44) during the linear engaging motion of the locking pin curved element (27) and the matching curved element (28).

6. The trailer coupling as cited in any of claims 2 to 5,
**characterised in that** the locking pin curved element (27) is arranged on an extension rod (24) of the locking pin (23).

7. The trailer coupling as cited in any of claims 1 to 6,
**characterised in that** the locking pin (23) is arranged centrally in a hollow shaft (7) on which the towing hitch bearing head (6) is supported.

8. The trailer coupling as cited in claim 7,
**characterised in that** the hollow shaft (7) with annular collar (13) engages in a bore (12) in the towing hitch bearing head (6).

9. The trailer coupling as cited in either of claims 7 or 8,
**characterised in that** the annular collar (13) is furnished with a plurality of perforations (15) distributed over its circumference, which are penetrated by planetary gears (14) that mesh with a hollow wheel (16) of the towing hitch bearing head (6).

10. The trailer coupling as cited in claim 9,
**characterised in that** the hollow wheel (16) is conformed integrally with the towing hitch bearing head (6).

11. The trailer coupling as cited in claim 10,
**characterised in that** the hollow wheel (16) is arranged so as to be axially displaceable on the planetary gears (14).

12. The trailer coupling as cited in any of claims 3 to 11,
**characterised in that** the pot (25) of the locking pin curved element (27) engages via feather keys in axial grooves (26) on the outer circumference of the hollow shaft (7).

13. The trailer coupling as cited in any of claims 2 to 12,
**characterised in that** a sun gear (17) meshing with the hollow wheel (16) of the planetary gear train (11) engages via lugs (42) in grooves (41a, 41b) conformed circumferentially in the large gearwheel (18).

14. The trailer coupling as cited in any of claims 1 to 13,
**characterised in that** counter-rotating ratchets (34, 35, 36; 38, 35, 39) are attached to the locking pin (23) in two radial planes (I; II) provided parallel and at a distance from one another.

## Revendications

1. Attelage de remorque (1) pour véhicules automobiles, comprenant une barre à boule (5) disposée de façon solidaire du véhicule, logée de façon à pouvoir basculer au moyen d'un entraînement (10) avec l'intercalage d'un engrenage planétaire (11) d'une position de repos à une position de service verrouillée et inversement, qui porte une boule d'attelage (4) sur son extrémité libre et éloignée de la tête de palier de la barre à boule (6), un boulon de blocage (23) coopérant dans la zone de la tête de palier de la barre à boule (6) avec des moyens d'arrêt (34) pouvant s'engager et se désengager radialement par rapport à l'axe de pivotement de la barre à boule, déplaçable axialement et pouvant être reculé contre un élément de force (43) appliqué, étant attribué à la barre à boule (5) pour la fixation et la libération du verrouillage,
**caractérisé en ce que**
le boulon de blocage (23) est relié par l'engrenage planétaire (11) à l'entraînement (10) et est réalisé sur son extrémité tournée vers l'entraînement (10) avec un moyen de commande de course (30) convertissant le mouvement de rotation de l'engrenage planétaire (11) en un mouvement de désengagement par translation, s'effectuant dans l'axe de pivotement de la barre à boule, du boulon de blocage (23).

2. Attelage de remorque selon la revendication 1,
**caractérisé en ce que**
le moyen de commande de course (30) est constitué d'une partie de came (27), entaillée côté avant en V, du boulon de blocage (23) et d'une contrepartie de came (28) faisant face à ce boulon, réalisée sur une grande roue dentée (18), qui s'engage avec un pignon (21) et est attribuée au niveau de la transmission à l'engrenage planétaire (11), entaillée en V avec un décalage sur le côté avant.

3. Attelage de remorque selon la revendication 2,
**caractérisé en ce que**
la partie de came du boulon de blocage (27) et la contrepartie de came (28) sont réalisées respectivement en tant que pot (25) vissé avec le boulon de blocage (23) et que tenon creux (29) de la grande roue dentée (18), les entailles de la came de commande en V étant prévues dans la paroi du pot ou du tenon creux (25 ; 29).

4. Attelage de remorque selon la revendication 2 ou 3,
**caractérisé en ce que**
le moyen de commande de course (30) est verrouillé dans la position de départ avec un boulon de blocage (23) engagé sous l'effet de la force.

5. Attelage de remorque selon la revendication 4,
**caractérisé en ce que**
le verrouillage est constitué d'une partie saillante (44) radiale du pot (25) présentant la partie de came du boulon de blocage (27) et d'un moyen de cliquet d'arrêt (45) prévu sur la grande roue dentée (18), qui libère la partie saillante (44) en cas de rotation de la roue dentée (18) ou s'enclenche automatiquement avec la partie saillante (44) lors de l'engagement linéaire de la partie de came du boulon de blocage (27) et de la contrepartie de came (28).

6. Attelage de remorque selon l'une quelconque des revendications 2 à 5,
**caractérisé en ce que**
la partie de came du boulon de blocage (27) est disposée sur une barre de prolongement (24) du boulon de blocage (23).

7. Attelage de remorque selon l'une quelconque des revendications 1 à 6,
**caractérisé en ce que**
le boulon de blocage (23) est disposé de façon centrale dans un arbre creux (7), sur lequel est logée la tête de palier de la barre à boule (6).

8. Attelage de remorque selon la revendication 7,
**caractérisé en ce que**
l'arbre creux (7) s'engage avec un rebord annulaire (13) dans un alésage de la tête de palier (12) de la barre à boule (6).

9. Attelage de remorque selon la revendication 7 ou 8,
**caractérisé en ce que**
le rebord annulaire (13) présente plusieurs percements (15) répartis sur son pourtour, à travers lesquels passent des roues planétaires (14) s'engrenant avec une roue creuse (16) de la tête de palier de la barre à boule (6).

10. Attelage de remorque selon la revendication 9,
**caractérisé en ce que**
la roue creuse (16) est formée d'une seule pièce avec la tête de palier de la barre à boule (6).

11. Attelage de remorque selon la revendication 9 ou 10,
**caractérisé en ce que**
la roue creuse (16) est disposée sur les roues planétaires (14) de façon à pouvoir coulisser axialement.

12. Attelage de remorque selon l'une quelconque des revendications 3 à 11,
**caractérisé en ce que**
le pot (25) de la partie de came du boulon de blocage (27) s'engage avec des ressorts d'ajustage dans des rainures axiales (26) sur le pourtour extérieur de l'arbre creux (7).

13. Attelage de remorque selon l'une quelconque des revendications 2 à 12,
**caractérisé en ce que**
une roue solaire (17) s'engrenant avec la roue creuse (16) de l'engrenage planétaire (11) s'engage par des moyens d'entraînement (42) dans des rainures (41a, 41b) réalisées dans la grande roue dentée (18) dans le sens périphérique.

14. Attelage de remorque selon l'une quelconque des revendications 1 à 13,
**caractérisé en ce que**
des moyens d'arrêt (34, 35, 36 ; 38, 35, 39) agissant dans le sens contraire dans deux plans radiaux (I ; II) prévus à distance parallèlement l'un à l'autre sont attribués au boulon de blocage (23).
